# EUROPÄISCHE PATENTSCHRIFT

(11) **EP 0 787 426 B1**
(45) Veröffentlichungstag und Bekanntmachung des Hinweises auf die Patenterteilung: **13.12.2000**
(21) Anmeldenummer: 97100733.1
(22) Anmeldetag: 17.01.1997
(51) Int. Cl.: A01D 43/08, A01F 29/12

(54) **Erntemaschine**
Conveying device for harvesting machine
Dispositif convoyeur pour moissonneuse

(30) Priorität: 31.01.1996 DE 19603370
(43) Veröffentlichungstag der Anmeldung: 06.08.1997
(73) Patentinhaber: DEERE & COMPANY, Moline, Illinois 61265-8098 (US)
(72) Erfinder: Leeb, Georg, 66482 Zweibrücken (DE)
(74) Vertreter: Feldmann, Bernhard

(56) Entgegenhaltungen:
- EP-A- 0 242 718
- EP-A- 0 510 470
- DE-C- 930 920
- DE-U- 9 002 780
- FR-A- 2 598 059
- FR-A- 2 692 430
- GB-A- 1 014 197
- GB-A- 2 012 540
- US-A- 1 558 394

## Beschreibung

Die Erfindung betrifft eine Erntemaschine, insbesondere Feldhäcksler, mit einem Gebläse, das mit einer Schneide versehene Paddel zum Fördern von Erntegut entlang einer Wandung aufweist.

Aus der DE 930 920 C und der FR 25 98 059 A sind Gebläse bekannt, die Paddel mit am äußeren Ende angebrachten Schneiden aufweisen. Die Schneiden verlaufen in radialer Richtung und wirken mit entsprechenden Gegenmessern zusammen.

Die US 1 558 394 A offenbart einen Häcksler mit Gebläsewirkung, der endseitig mit dreieckförmigen Zähnen versehene rotierende Platten aufweist, die das Gut durch eine gelochte Platte hindurchdrücken.

Als nachteilig ist dabei anzusehen, daß sich zwischen der Wandung und den Paddeln Erntegut ansammelt, das durch die Paddel nicht fortgefördert werden kann, und zu Reibung, erhöhtem Energiebedarf und Verschleiß der Paddel führt.

Der Prospekt 8/95 (M+E) dt. 150/190.432.7 der Fa. CLAAS offenbart einen Feldhäcksler mit einem eine Häckseltrommel enthaltenden Häckselaggregat, das Erntegut wie Mais, Gras, Sorghum und dergleichen zerkleinert und es einem Austragschacht zuführt, von wo aus es auf ein Begleitfahrzeug fliegt. In dem Austragschacht befindet sich ein Gebläse, um das Erntegut zu beschleunigen. Dieses Gebläse enthält einen Rotor mit drei Kreisscheiben, die über Leisten miteinander verbunden sind. Auf die schräg zu der Drehachse des Rotors verlaufenden Leisten sind Paddel aufgeschraubt, deren auslaufender Endbereich gezahnt bzw. gezackt ist.

Das der Erfindung zugrunde liegende Problem wird darin gesehen, daß derartige Paddel eine aufwendige Herstellung bedingen und auch die schräge Anordnung zu erhöhten Fertigungskosten führt.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise können kostengünstigere Paddel zur Verfügung gestellt werden, da es nur eines Schleif- oder Schmiedevorgangs bedarf, um geschärfte, d. h. mit einer Schneide versehene, Paddel herzustellen. Die mit der parallel zur Drehachse des Gebläses orientierten Schneide versehenen Paddel haben den Vorteil, daß sie zwischen sich und der Wandung befindliches Erntegut durchtrennen und damit Reibung verhindern, die zu einem hohen Leistungsbedarf, zu Verschleiß und hoher Hitzeentwicklung führt.

Wenn die Paddel im Schneidenbereich voreilend abgekröpft sind, bilden sie eine Tasche, die das Material davon abhält, sich allzu fest an die Wandung zu pressen. Auf diese Weise wird der Reibwiderstand weiter reduziert.

Starr befestigte Paddel können - anders als pendelnd aufgehängte - während der Drehbewegung nicht ausweichen und Erntegut in den Spalt zwischen sich und die Wandung gelangen lassen. Eine ähnliche Wirkung wird allerdings erzielt, wenn die pendelnden Paddel sehr schwer ausgebildet und mit einer hohen Umfangsgeschwindigkeit bewegt werden, weil sich dadurch hohe Zentrifugalkräfte ergeben, die zu einer annähernd starren Befestigung führen.

Für Wartungszwecke ist es sinnvoll, wenn die Paddel insbesondere einenends offene Schlitze zur Aufnahme von Befestigungsschrauben aufweisen, die eine radiale Bewegung zulassen, um die Schneide so nahe wie möglich an die Wandung heran zu bringen.

Paddel mit einem vorzugsweise mittig angeordneten einenends offenen Schlitz können relativ großflächig ausgebildet werden und sicher befestigt werden, indem sie mit diesem Schlitz ein Tragelement übergreifen und somit weit über dessen äußere Kante nach innen reichen.

Zur biegefesten Aufnahme der Paddel auf dem Rotor dient ein sich über die gesamte Breite des Rotors oder über lediglich jeweils ein Paddel erstreckender Paddelträger in der Form einer Leiste, der starr mit dem Rotor verbunden ist, z. B. an diesen angeschweißt ist.

Zum Niedrighalten der Herstellungs- und insbesondere der Wartungskosten werden mehrere kleine, nebeneinander befindliche Paddel statt eines durchgehenden Paddels vorgesehen.

Eine stoßweise Annahme des Förderguts, die zu Leistungsbedarfsspitzen führen kann, wird vermieden, wenn statt eines über die gesamte Breite des Rotors verlaufenden Paddels oder mehrerer nebeneinander befindlicher schmaler Paddel, die auf derselben Umfangslinie enden, in Umfangsrichtung zueinander versetzte Paddel vorgesehen sind, die zeitlich aufeinanderfolgend Erntegut annehmen.

Besonders geringe Fertigungs- und Bevorratungskosten fallen an, wenn die Paddel von Messern gebildet werden, die auf einer Häckseltrommel montiert werden, da es sich bei derartigen Messern um Masseprodukte handelt. Ein weiterer Vorteil besteht darin, daß im Falle eines nach langer Betriebszeit erfolgenden Stumpfwerdens diese Paddel auf die Häckseltrommel montiert und mit der dort ohnehin vorhandenen Schleifvorrichtung geschliffen werden können.

Andererseits kann auch für den Rotor mit den Paddeln eine eigene Schleifvorrichtung vorgesehen werden, was jedoch angesichts des geringen zu erwartenden Verschleisses nicht erforderlich erscheint.

Ein divergierender Verlauf der Haupterstreckungsebene der Paddel in bezug auf die Radiale des Rotors in der Art, daß die radial außenliegende Kante nachläuft, bewirkt eine leichtere Abgabe des Förderguts in den Austragschacht, weil dadurch eine Taschenbildung vermieden bzw. reduziert wird.

In der Zeichnung ist ein nachfolgend näher beschriebenes Ausführungsbeispiel der Erfindung dargestellt. Es zeigt:
- Fig. 1: eine Erntemaschine mit einem Gebläse in schematischer Darstellung und in Seitenansicht,
- Fig. 2: das Gebläse in vergrößerter Darstellung in Seitenansicht bei entfernter rechter Seitenwand und
- Fig. 3: einen Ausschnitt des Gebläses in der Drehrichtung gesehen.

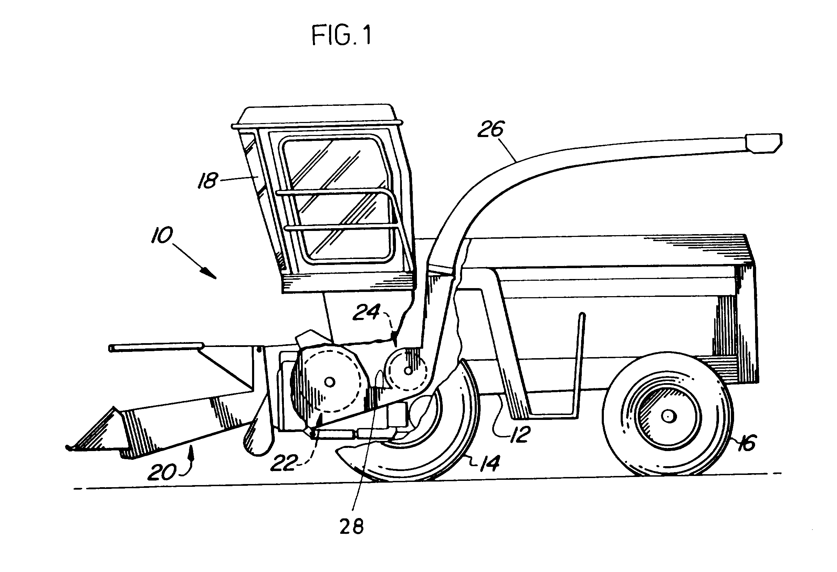

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einem Häckselaggregat 22 mit einer nicht im einzelnen gezeigten mit Messern bestückten Häckseltrommel und einer Gegenschneide zugeführt, das es in kleine Stücke häckselt und es einem Förderer in der Art eines Gebläses 24 aufgibt. Das Gut verläßt die Erntemaschine 10 zu einem nebenher fahrenden Anhänger über eine drehbare Austragsvorrichtung mit einem Austragschacht 26. Weitere Einzelheiten der Erntemaschine 10 bedürfen keiner Beschreibung, weil diese an sich bekannt ist.

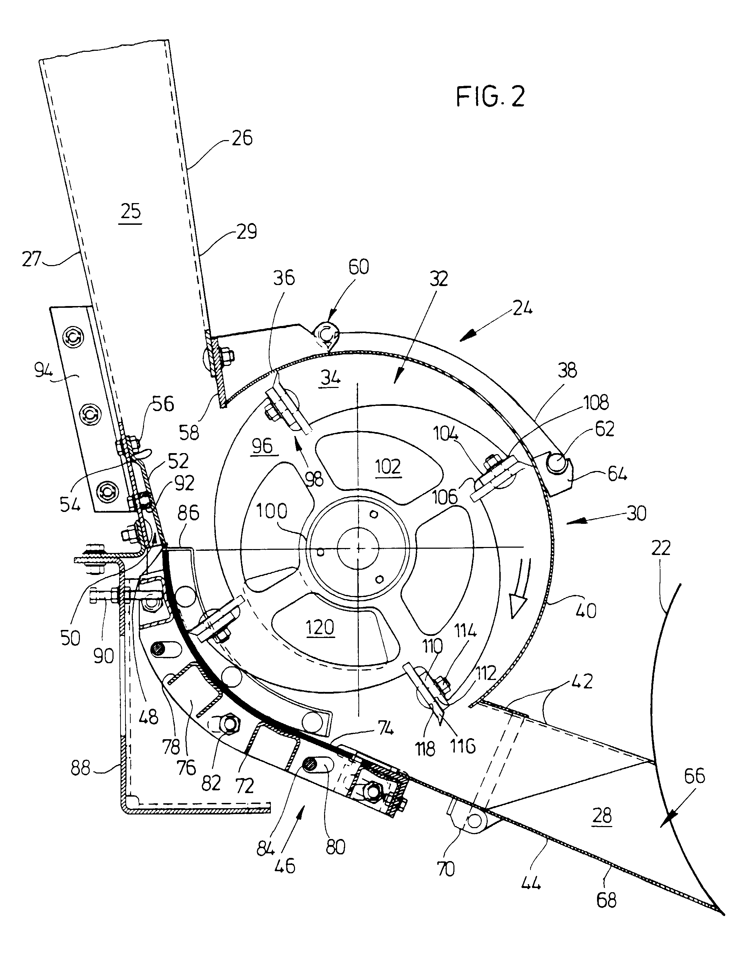

Gemäß Figur 2 ist das Gebläse 24 zwischen einem Eingangsschacht 28 und dem Austragschacht 26 angeordnet und enthält insbesondere ein Gehäuse 30 und einen Rotor 32.

Das Gehäuse 30 setzt sich zusammen aus zwei Seitenwänden 34, von denen lediglich die in normaler Fahrtrichtung linke Seitenwand 34 zu sehen ist; die rechte Seitenwand ist jedoch analog der linken Seitenwand 34 ausgebildet. Zwischen den Seitenwänden 34 erstreckt sich in einem oberen Bereich, ausgehend von der stromabwärts gelegenen Wand 29 des Austragschachts 26, ein starr angeordnetes erstes Mantelstück 36, daran anschließend ein Deckel 38, und auf diesen folgend ein zweites Mantelstück 40, das an eine Decke 42 des Eingangsschachts 28 anschließt. Die Innenflächen der Mantelstücke 36, 40 und des Deckels 38 verlaufen auf einer Kreislinie, die einen geringen Abstand zu dem Rotor 32 aufweist und zu diesem konzentrisch verläuft. An einen Boden 44 des Eingangsschachts 28 schließt sich über ein Bogenmaß von ca. 90° - 100° ein Gehäuseabschnitt 46 an, der mit seiner Innenfläche ebenfalls im wesentlichen der vorgenannten Kreislinie folgt. Der Gehäuseabschnitt 46 endet mit seiner oberen Kante 48 in unmittelbarer Nähe der stromaufwärts gelegenen Wand 27 des Austragschachts 26, beläßt zu dieser aber einen Spalt 50. Zwischen der Kante 48 und der stromaufwärts liegenden Wand 27 erstreckt sich schließlich ein Leitblech 52, das an letzterer über Laschen 54 und Schrauben 56 befestigt ist. Folglich wird das mit Blick auf die Zeichnung von rechts durch den Eingangsschacht 28 herangeführte Fördergut über den Boden 44, den Gehäuseabschnitt 46, das Leitblech 52 und die stromaufwärts gelegene Wand 27 geführt, von wo aus es auf die stromabwärts gelegene Wand 29 wechselt.

Das erste Mantelstück 36 ist über eine Leiste 58 an die stromabwärts gelegene Wand 29 angeschlossen und trägt an der gegenüberliegenden Endkante ein Teil eines Gelenks 60.

Der Deckel 38 greift mit einem Ende an dem anderen Teil des Gelenks 60 an und ist daher mit dem ersten Mantelteil 36 vertikal schwenkbar verbunden. In einer oberen und in der Zeichnung nicht wiedergegebenen Stellung gibt der Deckel 38 einen Zugang zu dem Rotor 32 für Wartungszwecke frei. An dem dem Gelenk 60 gegenüberliegenden Ende trägt der Deckel 38 eine Stange 62, die in einen mit dem zweiten Mantelstück 40 fest verbundenen Haken 64 einlegbar und mittels nicht gezeigter Schrauben, Stifte, Bolzen oder dergleichen dort festlegbar ist. Auf diese Weise wird verhindert, daß sich der Deckel 38 während des Betriebs selbsttätig öffnet.

Das zweite Mantelstück 40 verschließt den Abschnitt zwischen dem Deckel 38 und der Decke 42 des Eingangsschachts 28.

Die Decke 42 und der Boden 44 des Eingangsschachts 28 führen zu einem Abschnitt 66, der sich bis zu der Häckseltrommel 22 bzw. das sie umgebende Gehäuse erstreckt und im wesentlichen den gleichen Durchlaßquerschnitt aufweist wie der Eingangsschacht 28. Dieser Abschnitt 66 kann ganz demontiert und gegen einen anderen Abschnitt ersetzt werden, in dessen Innern sich eine Körnernachbehandlungseinheit befindet. An der Unterseite des Abschnitts 66 befindet sich darüber hinaus ein Wandteil 68, der an seinem in Figur 2 linken Ende über ein weiteres Gelenk 70 an dem Boden 44 angreift und nach Lösen nicht gezeigter Riegel nach unten wegklappbar ist.

Rückwärtig, d. h. in Figur 2 nach links, schließt sich an den Boden 44 der Gehäuseabschnitt 46 an, der sich vorwiegend aus einem Rahmen 72 und einer von einem Blech gebildeten Wandung 74 zusammensetzt.
Der Rahmen 72 wird von Wangen 76 und mit diesen verschweißten Spangen 78 von U-förmigem Querschnitt gebildet, die nach der Kreisumfangsfläche des Rotors 32 gebildet sind, zu dieser aber einen geringstmöglichen Abstand einhalten. In den Wangen 76 sind mehrere langlochartige Öffnungen 80 vorgesehen, durch die sich Schrauben 82 und Distanzhalter 84 in der Form von Rundstählen erstrecken. Sowohl die Schrauben 82 wie auch die Distanzhalter 84 sind in Bohrungen in den Seitenwänden 34 nunmehr allerdings radial unbeweglich eingesetzt. Während die Schrauben 82 dazu dienen, den Rahmen 72 an den Seitenwänden 34 in der richtigen Stellung festzulegen, sind die Distanzhalter 84 dazu bestimmt, die Seitenwände 34 stets in gleichem Abstand zueinander zu halten, so daß der Rahmen 72 wie auch die Wandung 74 zwischen den Seitenwänden 34 für Wartungszwecke bewegt werden kann.

Konzentrisch zu den Wangen 76 sind diesen gegenüber an den Seitenwänden 34 Führungen 86 angebracht, die zu der radial innenliegenden Fläche der Wangen 76 und somit zu der Auflagefläche der Wandung 74 einen Abstand aufweisen, der der Dicke der Wandung 74 entspricht. Die Führungen 86 sind aus gebogenem Winkelstahl gebildet, dessen einer Schenkel an den Seitenwänden 34 angeschraubt ist, während der andere Schenkel geringfügig von den Seitenwänden 34 nach innen absteht; allerdings ist auch ein entsprechend gebogenes Flacheisen verwendbar.

Die Wandung 74 ist aus einem Material gebildet, jedenfalls aber mit einer Oberfläche versehen, die eine hohe Festigkeit und somit eine hohe Standzeit besitzen. Je nach der Stärke der Wandung 74 kann diese entsprechend dem Drehkreis des Rotors 32 vorgebogen sein oder als flaches Blech auf den von dem Rotor 32 weggeschwenkten bzw. weggeschobenen Rahmen 72 gelegt werden. Jedenfalls wird durch ein Verschieben des Rahmens 72 auf den Distanzhaltern 84 bzw. ein Verschwenken um ein gegebenenfalls vorgesehenes Gelenk zu dem Rotor 32 hin die aufgelegte Wandung 74 zwischen dem Rahmen 72 und den Führungen 86 in die richtige Form gebracht und reibschlüssig gehalten. Darüber hinaus kommt es an seiner oberen Kante 48 an dem Leitblech 52 und mit seiner unteren Kante an dem Boden 44 zur Anlage, so daß es unverlierbar gehalten ist. Im oberen Bereich des Rahmens 72 ist eine in einem Träger 88 gehaltene Einstellschraube 90 vorgesehen, die eine Feineinstellung des Rahmens 72 und der Wandung 74 gegenüber dem Rotor 32 ermöglicht.

Das Leitblech 52 erstreckt sich über die gesamte Breite der stromaufwärts gelegenen Wand 27 und wird außer mit den Laschen 54 auch mittels gegebenenfalls in der Dicke veränderlichen Distanzhülsen 92 zu dieser auf Abstand gehalten. Lediglich die Laschen 54, die nur einen geringen Teil der Breite des Leitblechs 52 ausmachen, sind auf die Wand 27 zu gebogen. Auf diese Weise bleibt der Spalt 50 über die gesamte vertikale Erstreckung des Leitblechs 52 erhalten, und Luft kann von außerhalb des Gehäuses 30 durch den Spalt 50 in das Innere des Austragschachts 26 gesaugt werden.

Aus Figur 2 ist deutlich zu erkennen, daß die dem Rotor 32 zugelegene Fläche des Leitelements 52, das im wesentlichen Luft leitet, nicht auf der Tangentialen des Gehäuseabschnitts 46 in seinem Abwurfbereich liegt, sondern von diesem divergiert. Dem von dem Rotor 32 abgeworfenen Gut wird daher eine Richtung zu der Wand 29 hin erteilt, an der es bis zum Verlassen des Austragschachts 26 entlangstreift und somit nicht zu einem diffusen Materialstrom zerfällt.

Die Leiste 58 reicht bis nahezu an den Drehkreis des Rotors 32 heran und bildet dort eine Abrißkante für den mit dem Rotor 32 drehenden Luftzylinder.

Ferner ist Figur 2 zu entnehmen, daß der Austragschacht 26 mit seiner stromaufwärts gelegenen Wand 27 an einer Konsole 94 festgemacht ist und somit auch gehalten wird, wenn das Gehäuse 30 für Wartungszwecke ausgebaut werden sollte.

Der Rotor 32 setzt sich vorwiegend aus Tragelementen 96, Förderelementen 98 und einer Welle 100 zusammen, die sich zwischen den Seitenwänden 34 erstrecken und gemeinsam um eine Drehachse drehen.

Bei diesem Ausführungsbeispiel sind mit axialem Abstand drei Tragelemente 96 auf die Welle 100 aufgeschweißt und zu dieser radial ausgerichtet. Die Tragelemente 96 sind zwar scheibenförmig gestaltet, sie enthalten aber in jedem 90°-Sektor eine nierenförmige Durchbrechung 102, die einen wesentlichen Teil jeder Sektorfläche einnimmt. Zudem endet der verbleibende Teil des Tragelements 96 nicht auf einem Kreisbogen, sondern weist radial verlaufende Stege 104 auf, die sich ungefähr über ein Fünftel des Radius' erstrecken und eine Innen- und eine Außenkante 106, 108 aufweisen. Zwischen den Stegen 104 verläuft die Außenkante der Tragelemente 96 jeweils derart, daß sie an der Außenkante 108 des voreilenden Stegs 104 beginnt und mit stets geringer werdendem Durchmesser an der Innenkante 106 des nachfolgenden Stegs 104 endet. Bei dem gezeigten Ausführungsbeispiel sind vier Förderelemente 98 vorgesehen, so daß sich auch vier sichelförmig verlaufende Außenkanten an den Tragelementen 96 ergeben.

An die Stege 104 ist in diesem Ausführungsbeispiel flach anliegend und sich somit radial erstreckend jeweils ein Paddelträger 110 angeschweißt, der sich über die gesamte Breite des Rotors 32 erstreckt und die Tragelemente 96 untereinander verbindet. Nach alledem sind die Tragelemente 96 einerseits mit der Welle 100 und andererseits mit den Paddelträgern 110 verschweißt und ergeben somit einen robusten Drehkörper in offener Bauweise. Die Paddelträger 110 sind mit Bohrungen 112 für Schrauben 114 versehen. Allerdings sind auch andere Bauweisen denkbar, bei denen sich die Paddelträger 110 nicht über die gesamte Breite des Rotors 32 erstrecken, sondern nur über einen Teilbereich, der jeweils einem Förderelement 98 zugeordnet ist.

Die Förderelemente 98 enthalten neben den Paddelträgern 110 auch Paddel 116, die auf letzteren mittels der Schrauben 114 befestigt werden. Hierzu sind in den Paddeln 116 einenends offene Schlitze 118 vorgesehen, die eine radiale Einstellung der Paddel 116 in bezug auf das Gehäuse 30 erlauben. Allerdings können die Paddel 116 auch unmittelbar, d. h. ohne Verwendung eines Paddelträgers 110 an den Tragelementen 96 angebracht sein.

Die Welle 100 erstreckt sich durch geeignete Öffnungen in den Seitenwänden 34 in entsprechende Lagervorrichtungen und ist mit einer hohen Drehzahl über eine nicht gezeigte Riemenscheibe antreibbar.

In den Seitenwänden 34 ist ebenfalls eine Öffnung 120 vorgesehen, die je nach der Stellung des Rotors 32 mit einer der Durchbrechungen 102 in den Tragelementen 96 fluchten kann. Allerdings ist der Durchlaßquerschnitt der Öffnungen 120 etwas größer als der der Durchbrechungen 102. Die Öffnungen 120 befinden sich bei diesem Ausführungsbeispiel jeweils im oder wesentlich im ersten Quadranten, d. h. 90°-Sektor, stromabwärts des Eingangsschachts 28. Es ist - allerdings ohne Darstellung - auch möglich, an der Außenseite der Seitenwände 34 ein verschiebbares Stellblech oder dergleichen vorzusehen, mit dessen Hilfe der Durchlaßquerschnitt verkleinert oder verlagert werden kann. Eine derartige Verstellung könnte manuell, gegebenenfalls von der Fahrerkabine 18 aus, oder automatisch in Abhängigkeit von bestimmten eintretenden Gegebenheiten erfolgen.

Nach alledem zeigt sich, daß der in Pfeilrichtung drehende Rotor 32 zu dem Gut aus dem Einlaßschacht 28 durch die Öffnungen 120 und die Durchbrechungen 102 zusätzlich Luft ansaugen kann, das den Volumenstrom anreichert und eine problemlose Abgabe des Guts in den Austragschacht 26 sowie einen kompakten Materialstrom innerhalb des Austragschachts 26 gewährleistet.

Zudem wird vermieden, daß Luft in den Eingangsschacht 28 zurückgeblasen wird, die die Gutannahme verhindert. Es entsteht vielmehr ein Sog, der mit dem Förderdruck in dem Austragschacht 28 für ausgewogene Strömungsverhältnisse sorgt.

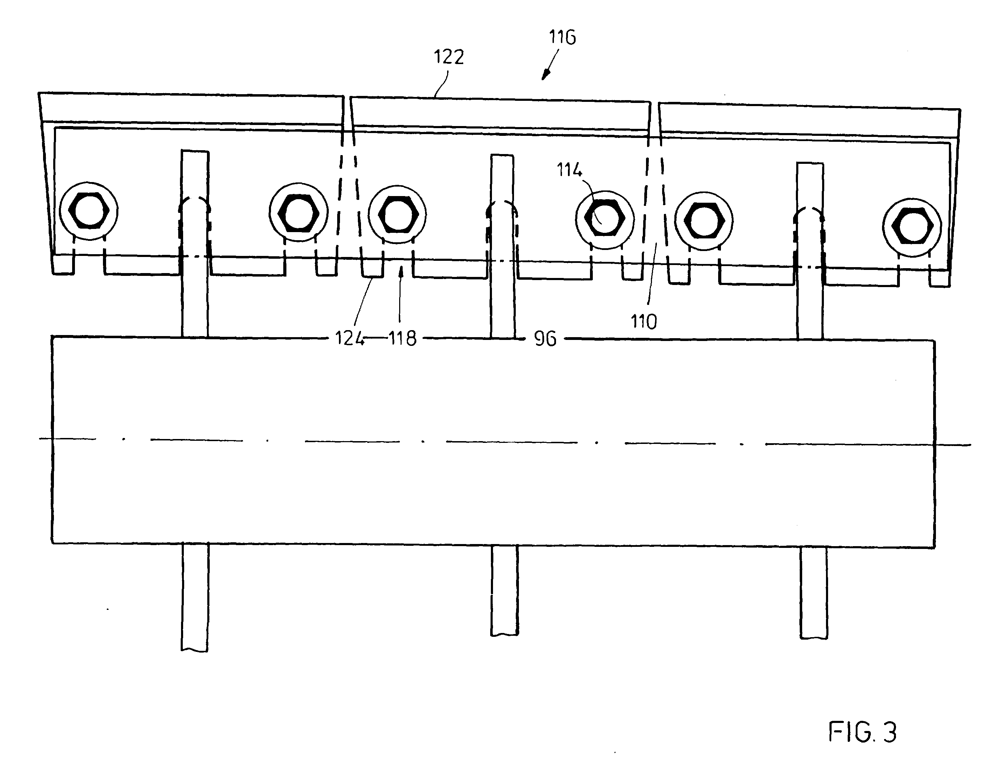

Die Paddel 116 werden in diesem Ausführungsbeispiel von Messern gebildet, wie sie auf einer Häckseltrommel des Häckselaggregats 22 zum Schneiden des Ernteguts verwendet werden und aus Figur 3 ersichtlich sind.

Danach weist ein solches Paddel 116 eine im wesentlichen trapezförmige Gestalt auf, wobei die längste Seite des Paddels 116 in einer Schneide 122 ausläuft. In dem der Schneide 122 gegenüberliegenden Bereich erstrecken sich zu einer Endkante 124 hin die offenen Schlitze 118, und zwar senkrecht zu der Schneide 122. Diese Paddel 116 können eben, gemäß der DE-C2-27 37 683, oder im Schneidenbereich geringfügig tordiert, wie es aus der DE-A1-44 18 697 bekannt ist, oder im Schneidenbereich leicht abgekröpft sein, wie dies aus der US-A-4,257,566 bekannt ist. Auch im übrigen können die Paddel 116 den dort jeweils beschriebenen im wesentlichen entsprechen.

Jedes Paddel 116 ist über seine Breite mit drei Schlitzen 118 versehen, wobei gemäß Figur 3 die äußeren Schlitze 118 der Aufnahme der Schrauben 114 gegebenenfalls mit Unterlegscheibe dienen und eine radiale Einstellung, die an der Leiste 58 ausgerichtet ist, ermöglichen. Der mittlere Schlitz 118 wird in diesem Ausführungsbeispiel nicht zur Befestigung benötigt, sondern übergreift das Tragelement 96 zu beiden Seiten und kann sich somit weit zur Rotormitte hin erstrecken. Der mittlere Schlitz 118 erlaubt somit neben einer gegenüber dem Tragelement 96 zentrischen Anordnung auch die Verwendung eines Paddels 116 mit einer relativ großen Oberfläche, die eine hervorragende Gutmitnahme bewirkt.

Die Paddel 116 sind im Bereich ihrer Schneiden 122 gegenüber dem übrigen Paddel 116 leicht voreilend abgekröpft und halten damit das Fördergut von einer geradlinigen Bewegung zu der Fläche der jeweiligen Wandung 74 hin ab, wodurch der Reibwiderstand weiter herabgesetzt wird.

Die Paddel 116 können nebeneinander auf den Paddelträger 110 aufgesetzt werden oder derart angeordnet werden, daß sie tangential zueinander versetzt sind. Hierzu kann gegebenenfalls der Paddelträger 110 im wesentlichen so breit wie die Paddel 116 ausgebildet werden, anstatt sich über die gesamte Breite des Gebläses 24 zu erstrecken. Auf diese Weise würde vermieden werden, daß das Erntegut jeweils schubweise und in großen Portionen befördert wird, was zu Lastspitzen führen könnte. In dem Ausführungsbeispiel enden alle Paddel 116 auf derselben Umfangslinie.

Der Versatz der Paddel 116 kann derart gewählt werden, daß sich äußere Paddel 116 auf gleicher Höhe befinden, während nach innen folgende jeweils um eine Stellung nachlaufen, oder daß auf einer Seite außen beginnend das jeweils seitlich folgende eine Stellung nachlaufend angebracht ist.

In dem Ausführungsbeispiel sind drei Paddel 116 nebeneinander angeordnet und bedecken damit die Breite des Rotors 32. Allerdings können auch mehr, selten aber weniger Paddel 116 vorgesehen werden. Es ist nicht erforderlich, daß die einander zugelegenen Seitenkanten benachbarter Paddel 116 auf einer Kreisfläche liegen; vielmehr können sich die Paddel 116 in axialer Richtung auch geringfügig überdecken oder einen kleinen Abstand zueinander aufweisen.

Anstatt wie bei dem gewählten Ausführungsbeispiel können auch mehr oder weniger als vier Paddelträger 110 verwendet werden, wobei eine Anzahl von acht Paddelträgern 110 sehr wirksam ist und noch in einem ausgewogenen Verhältnis zu den Herstellungskosten steht. Desgleichen können die Tragelemente 96 anders ausgebildet werden, da es im wesentlichen auf die Ausbildung der Paddel 116 mit einer Schneide 122 ankommt.

Nach einer weiteren Bauart können die Paddel 116 so ausgerichtet sein, daß ihre Haupterstreckungsebene geringfügig divergierend zu einer sie treffenden Radialen des Rotors 32 verläuft, wobei die radial innenliegende Kante voreilt. Der Winkel könnte zwischen 5 und 15 Grad liegen und vorzugsweise 10 Grad betragen.

## Patentansprüche

1. Erntemaschine (10), insbesondere Feldhäcksler, mit einem Gebläse (24), das mit einer Schneide (122) versehene Paddel (116) zum Fördern von Erntegut entlang einer Wandung (74) aufweist, dadurch gekennzeichnet, daß die Paddel (116) an dem radial außenliegenden Ende mit der Schneide (122) versehen sind, die parallel zur Drehachse des Gebläses (24) verläuft und derart angeordnet ist, daß sie zwischen sich und der Wandung befindliches Erntegut durchtrennt.

2. Erntemaschine nach Anspruch 1, dadurch gekennzeichnet, daß die Paddel (116) im Bereich ihrer Schneide (122) voreilend abgekröpft sind.

3. Erntemaschine nach Anspruch 1 oder 2, dadurch gekennzeichnet, daß die Paddel (116) starr an einem Rotor (32) befestigt sind.

4. Erntemaschine nach einem oder mehreren der vorherigen Ansprüche, dadurch gekennzeichnet, daß die Paddel (116) mit Schlitzen (118) für eine radiale Einstellung versehen sind.

5. Erntemaschine nach Anspruch 4, dadurch gekennzeichnet, daß die Paddel (116) mittels eines Schlitzes (118) ein Tragelement (96) des Rotors (32) übergreifen.

6. Erntemaschine nach einem oder mehreren der vorherigen Ansprüche, dadurch gekennzeichnet, daß der Rotor (32) axial verlaufende Paddelträger (110) zur lösbaren Befestigung der Paddel (116) aufweist.

7. Erntemaschine nach einem oder mehreren der vorherigen Ansprüche, dadurch gekennzeichnet, daß in axialer Richtung mehrere Paddel (116) nebeneinander vorgesehen sind.

8. Erntemaschine nach Anspruch 7, dadurch gekennzeichnet, daß die Paddel (116) in Reihen angeordnet und tangential zueinander versetzt sind.

9. Erntemaschine nach einem oder mehreren der vorherigen Ansprüche, dadurch gekennzeichnet, daß die Paddel (116) von auf einer Häckseltrommel befestigbaren Messern gebildet werden.

10. Erntemaschine nach einem oder mehreren der vorherigen Ansprüche, dadurch gekennzeichnet, daß die Haupterstreckungsebene der Paddel (116) unter einem Winkel von 5 - 15 Grad divergierend zu einer Radialen durch die Drehachse des Rotors (32) verläuft.

## Claims

1. A harvesting machine (10), especially a forage harvester, with a blower (24) which comprises paddles (116) provided with cutting edges (122) for feeding harvested material along a wall (74), characterized in that the paddles (116) are provided with the cutting edges (122) on the radially outer ends, running parallel to the axis of rotation of the blower (24) and so arranged that they cut through harvested material located between them and the wall.

2. A harvesting machine according to claim 1, characterized in that the paddles (116) are bent over in the leading direction in the region of their cutting edges (122).

3. A harvesting machine according to claim I or 2, characterized in that the paddles (116) are fixed rigidly to a rotor (32).

4. A harvesting machine according to one or more of the preceding claims, characterized in that the paddles (116) are provided with slots (118) for radial adjustment.

5. A harvesting machine according to claim 4, characterized in that the paddles (116) engage on a support element (96) of the rotor (32) by means of slots (118).

6. A harvesting machine according to one or more of the preceding claims, characterized in that the rotor (32) has axially running paddle supports (110) for releasable attachment of the paddles (116).

7. A harvesting machine according to one or more of the preceding claims, characterized in that a plurality of paddles (116) are provided alongside one another in the axial direction.

8. A harvesting machine according to claim 7, characterized in that the paddles (116) are arranged in rows and are offset relative to one another tangentially.

9. A harvesting machine according to one or more of the preceding claims, characterized in that the paddles (116) are formed from knives which can be fixed to a chopping drum.

10. A harvesting machine according to one or more of the preceding claims, characterized in that the main plane of extension of the paddles (116) runs at an angle from 5 to 15 degrees diverging from a radial plane through the axis of rotation of the rotor (32).

## Revendications

1. Moissonneuse (10), notamment ramasseuse-hacheuse comportant un ventilateur (24), qui comprend des pales (116) pourvues d'un tranchant (122) et servant à entraîner la matière récoltée le long d'une paroi (74), caractérisée en ce que les pales (116) sont prévues sur l'extrémité extérieure du point de vue radial comportant le tranchant (122) qui s'étend parallèlement à l'axe de rotation du ventilateur (24) et est disposé de telle sorte qu'il sectionne la matière récoltée située entre lui-même et la paroi.

2. Moissonneuse selon la revendication 1, caractérisée en ce que les pales (116) sont incurvées vers l'avant dans la zone de leur tranchant (122).

3. Moissonneuse selon la revendication 1 ou 2, caractérisée en ce que les pales (116) sont fixées rigidement sur un rotor (32).

4. Moissonneuse selon une ou plusieurs des revendications précédentes, caractérisée en ce que les pales (116) comportent des fentes (118) pour un réglage radial.

5. Moissonneuse selon la revendication 4, caractérisée en ce que les pales (116) s'engagent, au moyen d'une fente (118), au-dessus d'un élément de support (96) du rotor (32).

6. Moissonneuse selon une ou plusieurs des revendications précédentes, caractérisée en ce que le rotor (32) comporte des supports (110) pour pales, qui s'étendent axialement et servent à fixer de façon amovible les pales (116).

7. Moissonneuse selon une ou plusieurs des revendications précédentes, caractérisée en ce que plusieurs pales (116) sont prévues les unes à côté des autres dans la direction axiale.

8. Moissonneuse selon la revendication 7, caractérisée en ce que les pales (116) sont disposées suivant des rangées et sont décalées tangentiellement les unes par rapport aux autres.

9. Moissonneuse selon une ou plusieurs des revendications précédentes, caractérisée en ce que les pales (116) sont formées de couteaux pouvant être fixés sur un tambour de hachage.

10. Moissonneuse selon une ou plusieurs des revendications précédentes, caractérisée en ce que le plan principal d'extension des pales (116) s'écarte d'une radiale passant par l'axe du rotor (32), sous un angle de 5-15 degrés.
